# EUROPEAN PATENT APPLICATION

(11) **EP 3 096 425 A1**
(43) Date of publication of application: **23.11.2016**
(21) Application number: 16169946.7
(22) Date of filing: 17.05.2016
(51) Int. Cl.: H02G 5/00

(54) **BUSBAR ARRANGEMENT**

(30) Priority: 18.05.2015 TR 201506004
(71) Applicant: Eae Elektrik Asansor Endustrisi Insaat Sanayi Ve Tikaret Anonim Sirketi, Istanbul (TR)
(72) Inventor: VOSK , Vedat, Istanbul (TR)
(74) Representative: Dereligil, Ersin

(57) **Abstract**

The invention relates to an electricity transmission mechanism (10) having a metal housing (9) and more than one transmission busbars (12, 13, 14) covered with a protective sheath (11) inside. Said electricity transmission mechanism (10) is characterized in comprising neutral busbars (15, 16) provided between the transmission busbars (12, 13, 14) in order to reduce the electromagnetic effect it generates.

## Description

### TECHNICAL FIELD

The invention relates to an electricity transmission mechanism (Busbar) used in order to transmit electricity between the electricity distribution units and devices.

### PRIOR ART

The busbars are conductors providing transmission of the electric energy from electricity distribution units to the devices operating with electric energy. The busbars are used in transmitting electric energy generated in plants to the devices in switchyards. The busbars are also used in medium and high voltage switchboards as phase, neutral and earth conductors. The busbars used in plants, substations, switchyards, measurement centers, electricity distribution boards, electricity distribution systems etc. are dyed in various colors such as yellow, green and purple. The busbars are generally made of various conductive metals such as copper and aluminum.

The transmission mechanism is formed by bringing more than one busbars together. There is a magnetic field formed when current passes over the busbars constituting the transmission mechanisms. This magnetic field may cause the transmitted signals to be jammed under some conditions. Moreover, these high magnetic fields may affect human health.

In the patent application No. 2011/03349 filed in relation with this subject, a data transmission cable is described which particularly provides transmission of signals and connection between the electronic control units in the vehicles in automotive sector. The object of the data transmission cable is to provide the least effect from electromagnetic fluctuations in the medium to which it is connected. It is aimed to achieve said object by means of a protective sheath applied onto the bare conductive copper cable twisted with the veins providing data transmission in data cables.

In the patent application No. WO2008092251A1, an electricity transmission mechanism is described which consists of busbars having three different phases. It is aimed that the electromagnetic field formed according to the positioning style of the busbars constituting said transmission mechanism is minimized. However, positioning more than busbar as to contact each other may pose a disadvantage.

In the patent application No. US6433272B1, a transmission busbar is described which consists of busbars having more than one phase. There is described a device which generates the least magnetic field according to the positioning styles and positions of said busbars in said application. Said device organizes the positioning distances between them according to the charge distributions of the busbars and reduces the electromagnetic field.

Consequently, there is a need for an improvement in the technical field related to above mentioned situations.

### BRIEF DESCRIPTION OF THE INVENTION

The present invention relates to a novel electricity transmission mechanism (Busbar), internal structure of which is changed in order to eliminate the above mentioned disadvantages and to provide new advantages in the related technical field.

The main object of the invention is providing an electricity transmission mechanism which reduced the effect of the electromagnetic field generated by the busbars brought together.

Another object of the invention is providing a transmission busbar which reduces the electromagnetic field effect according to the positioning style of the busbar without extra operation.

In order to achieve all of the objects mentioned above and deduced from the detailed description below, the present invention relates to an electricity transmission mechanism having a protective sheath and more than one transmission busbar provided inside said protective sheath. Said electricity transmission mechanism is characterized in comprising a neutral line busbar provided between electricity transmission busbars called phase in order to reduce the electromagnetic effect it generates.

Another embodiment of the invention is characterized in that the phase order of the transmission busbar is arranged such that the neutral transmission busbar is placed between the first transmission busbar and the second transmission busbar as an insulation line and that the neutral transmission busbar is again placed between the second transmission busbar and the third transmission busbar as an insulation line. Moreover, the metal housing used as the busbar body may be provided as a PE earth transmission busbar.

The invention should be assessed together with the drawings which are described below in order to understand the embodiment and the advantages of the invention with additional members more clearly.

### BRIEF DESCRIPTION OF THE DRAWINGS

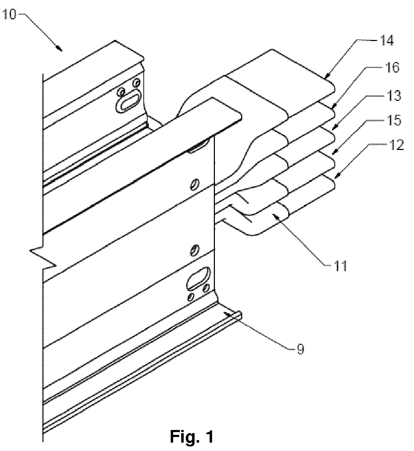

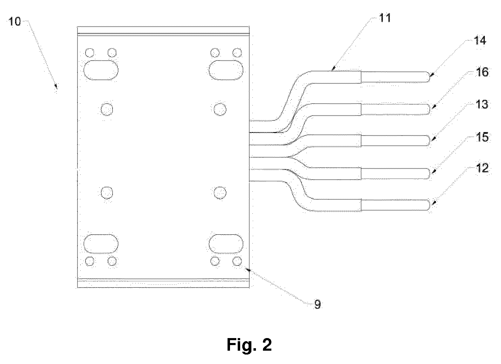

Figure 1 shows general views of the transmission cable and the busbars inside.

### REFERENCE NUMBERS

9 Metal housing
10 Electricity transmission mechanism
11 Protective sheath
12 First transmission busbar
13 Second transmission busbar
14 Third transmission busbar
15 Neutral transmission busbar
16 Neutral transmission busbar

### DETAILED DESCRIPTION OF THE INVENTION

In this detailed description, the novelty of the present invention is only described by way of examples for a better understanding of the subject and should not be considered as limiting the scope of the invention. Accordingly, an electricity transmission mechanism (10) which minimizes the magnetic field effect by changing the order of the transmission busbar inside and the advantages of the electricity transmission mechanism (10) are described in the description and drawings below.

Referring to Fig. 1, a general view is provided such that the busbars inside electricity transmission mechanism (10) can be seen. The electricity transmission mechanism (10) consists of more than one busbar covered with a protective sheath (11) inside a metal housing (9). There are three electricity transmission busbars (12, 13, 14) called phase covered with the protective sheath (11) inside the metal housing (9). The electricity transmission busbars (12, 13, 14) are used in order to conduct energy from one source or unit to another. There is a magnetic field formed when electric current passes over the electricity transmission busbars (12, 13, 14). When the electricity transmission busbars (12, 13, 14) are together, the power of the magnetic field increases. There are two neutral transmission busbars (15, 16) in the metal housing (9). The neutral transmission busbars (15, 16) represents the line used for transmitting the residual and unbalanced current in electric systems. The neutral transmission busbars (15, 16) are used in order to complete the circuits in the devices to which residual currents in the systems and single phase energy are transmitted. They can also be used in some applications in order to avoid fault currents inside the system and dangerous situations which can be harmful for human health.

The following operations are performed respectively in order to reduce the magnetic field formed around the electricity transmission mechanism (10). A neutral transmission busbar (15) is placed between the first electricity transmission busbar (12) and the second electricity transmission busbar (13). Similarly, a neutral transmission busbar (16) is placed between the second electricity transmission busbar (13) and the third electricity transmission busbar (14). In this way, the power of the magnetic field formed is reduced thanks to the neutral transmission busbars placed between the electricity transmission busbars (12i 13i 14). In addition to these operations, the metal housing (9) may be chosen from different materials in order to reduce the effect of the magnetic field. The material from which the metal housing (9) is made can be chosen from a material having an electromagnetic power reducing feature.

## Claims

1. An electricity transmission mechanism (10) having a metal housing (9) and more than one transmission busbars (12, 13, 14) covered with a protective sheath (11) inside the metal housing (9), **characterized in** comprising neutral line provided between each transmission busbars (12, 13, 14).

2. An electricity transmission mechanism according to claim 1, **characterized in that** said neutral line is 2 neutral transmission busbars (15, 16).

3. An electricity transmission mechanism (10) according to claim 1 to 2, **characterized in that** the phase order is arranged such that the neutral transmission busbar (15) is placed between the first transmission busbar (12) and the second transmission busbar (13) and that the neutral transmission busbar (16) is placed between the second transmission busbar (13) and the third transmission busbar (14).
